# EUROPEAN PATENT SPECIFICATION

(11) **EP 3 677 539 B1**
(45) Date of publication and mention of the grant of the patent: **04.08.2021**
(21) Application number: 19150452.1
(22) Date of filing: 07.01.2019
(51) Int. Cl.: B66D 5/30, B66D 5/08, H02K 7/102, F16D 65/00, B66B 1/32

(54) **AN ELEVATOR MACHINERY BRAKE**
AUFZUGSMASCHINENBREMSE
FREIN DE MACHINERIE D'ASCENSEUR

(43) Date of publication of application: 08.07.2020
(73) Proprietor: KONE Corporation, 00330 Helsinki (FI)
(72) Inventor: Korpela, Arto, 00330 Helsinki (FI)
(74) Representative: Kolster Oy Ab

(56) References cited:
- EP-A1- 2 868 617
- DE-U1-202011 109 093
- GB-A- 2 236 623

## Description

### FIELD

The invention relates to an elevator machinery brake.

### BACKGROUND

An elevator may comprise a car, a shaft, hoisting machinery, ropes, and a counterweight. A separate or an integrated car frame may surround the car.

The hoisting machinery may be positioned in the shaft. The hoisting machinery may comprise a drive, an electric motor, a traction sheave, and a machinery brake. The hoisting machinery may move the car upwards and downwards in the shaft. The machinery brake may stop the rotation of the traction sheave and thereby the movement of the elevator car.

The car frame may be connected by the ropes via the traction sheave to the counterweight. The car frame may further be supported with gliding means at guide rails extending in the vertical direction in the shaft. The guide rails may be attached with fastening brackets to the side wall structures in the shaft. The gliding means keep the car in position in the horizontal plane when the car moves upwards and downwards in the shaft. The counterweight may be supported in a corresponding way on guide rails that are attached to the wall structure of the shaft.

The car may transport people and/or goods between the landings in the building. The shaft may be formed so that the wall structure is formed of solid walls or so that the wall structure is formed of an open steel structure.

The machinery brake may be an electromagnetic brake. The electromagnetic brake may comprise a frame part and an armature part being movably attached to the frame part. Spring means may be arranged to operate between the frame part and the armature part in order to push the armature part away from the frame part when the machinery brake is activated. A brake shoe acting on a brake surface may be attached to the armature part. The brake shoe is pushed against the brake surface when the machinery brake is activated. Electromagnet means may further be arranged in the frame part. The magnetic field of the electromagnet means pulls the armature part against the force of the spring means towards the frame part. The machinery brake is deactivated i.e. the brake shoe is drawn away from the brake surface when the electromagnet is deactivated.

WO 2012/152998 discloses a damping plate in an electromagnetic machinery brake. A planar, elastically bendable damping plate is positioned between a frame part and an armature part in an electromagnetic brake. The damping plate bends when the armature part hits the frame part and produces thereby a damping force resisting the bending in order to dampen brake noise. To generate the damping effect by bending the planar damping plate, the opposing surfaces of the frame and armature, between which the damping plate is provided, must both be machined to follow a curvature suitable for bending the damper plate. For large objects like the machinery brake frame and armature, this requires an extensive amount of precision machining.

EP 2 868 617 discloses an elevator machinery brake according to the preamble of the independent claim 1. In particular, it discloses a damping arrangement in an electromagnetic machinery brake. Several channels are machined around a magnetization coil in a frame part and in an armature part. At least one dampening element is fixed with fixing means into each channel. The work springs providing the thrust to an engaged machinery brake armature are accommodated in the same channels as the guide pins and dampening arrangements. Therefore, a tightening bolt needs to be provided for each work spring to enable work spring tension adjustment for equalization of spring tension.

### SUMMARY

An object of the present invention is an improved elevator machinery brake.

The elevator machinery brake according to the invention is defined in claim 1.

The elevator machinery brake comprises:
a frame part having a first surface,
an armature part having a first surface facing towards the first surface of the frame part, the armature part being movably supported through at least two supporting points on the frame part, the at least two supporting points limiting a width of a gap between the first surface of the frame part and the first surface of the armature part,
spring means fitted at least partly into the frame part and acting between the frame part and the armature part for pushing the armature part in a first direction away from the frame part in order to activate the machinery brake,
electromagnet means fitted into the frame part for pulling the armature part in a second direction opposite to the first direction against the force of the spring means towards the frame part in order to deactivate the machinery brake, whereby each of the supporting points comprises
a longitudinal support pin extending between the armature part and the frame part for supporting the armature part movably on the frame part and for limiting the width of the gap,
a sliding bearing surrounding the support pin in the armature part, a flange of the sliding bearing seating against the first surface of the armature part,
a damper plate surrounding the support pin in the gap and seating against the flange of the sliding bearing,
a recess surrounding the support pin in the frame part, said recess extending from the first surface of the frame part inwards into the frame part, whereby
the armature part is movable in the first and in the second direction via the sliding bearing on the support pins,
the flange of the sliding bearing and the damper plate act as damping elements when the electromagnet means pulls the armature part towards the frame part,
the damper plate is bendable into the recess when the electromagnet means pulls the armature part towards the frame part.

The machinery brake according to the invention provides a simple construction which still meets all the requirements of the European elevator standard EN 81-20.

The machinery brake may realize three different functionalities with a simple support arrangement between the armature part and the frame part. The support arrangement provides as a first functionality force transfer and guidance for the movement of the armature part in relation to the frame part. The support arrangement provides as a second functionality dampening when the armature part hits towards the frame part. The support arrangement provides as a third functionality a gap between the armature part and the frame part.

The production costs of the machinery brake may be reduced due to a reduced number of parts needed in the support arrangement and due to a reduced number of machined surfaces needed in the machinery brake.

### DRAWINGS

The invention will in the following be described in greater detail by means of preferred embodiments with reference to the attached drawings, in which
Figure 1 shows a side view of an elevator,
Figure 2 shows an axonometric view of an elevator machinery brake,
Figure 3 shows a cross sectional view of the elevator machinery brake,
Figure 4 shows a cross sectional view of a fastening arrangement in the elevator machinery brake.

### DETAILED DESCRIPTION

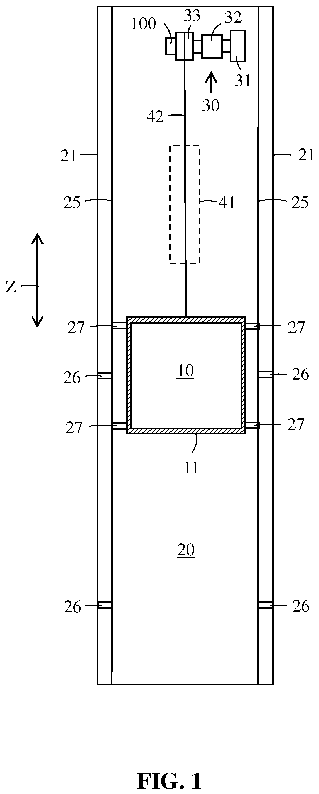

Fig. 1 shows a side view of an elevator.

The elevator may comprise a car 10, an elevator shaft 20, hoisting machinery 30, ropes 42, and a counterweight 41. A separate or an integrated car frame 11 may surround the car 10.

The hoisting machinery 30 may be positioned in the shaft 20. The hoisting machinery may comprise a drive 31, an electric motor 32, a traction sheave 33, and a machinery brake 100. The hoisting machinery 30 may move the car 10 in a vertical direction Z upwards and downwards in the vertically extending elevator shaft 20. The machinery brake 100 may stop the rotation of the traction sheave 33 and thereby the movement of the elevator car 10.

The car frame 11 may be connected by the ropes 42 via the traction sheave 33 to the counterweight 41. The car frame 11 may further be supported with gliding means 27 at guide rails 25 extending in the vertical direction in the shaft 20. The gliding means 27 may comprise rolls rolling on the guide rails 25 or gliding shoes gliding on the guide rails 25 when the car 10 is moving upwards and downwards in the elevator shaft 20. The guide rails 25 may be attached with fastening brackets 26 to the side wall structures 21 in the elevator shaft 20. The gliding means 27 keep the car 10 in position in the horizontal plane when the car 10 moves upwards and downwards in the elevator shaft 20. The counterweight 41 may be supported in a corresponding way on guide rails that are attached to the wall structure 21 of the shaft 20.

The car 10 may transport people and/or goods between the landings in the building. The elevator shaft 20 may be formed so that the wall structure 21 is formed of solid walls or so that the wall structure 21 is formed of an open steel structure.

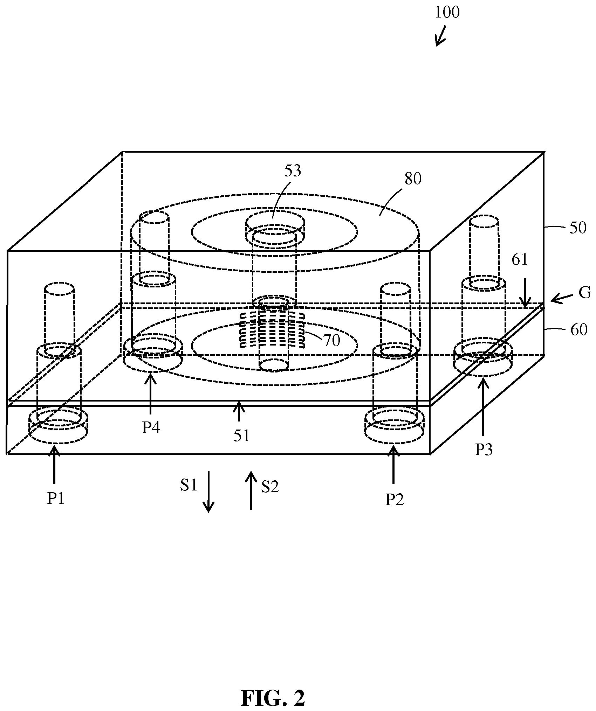

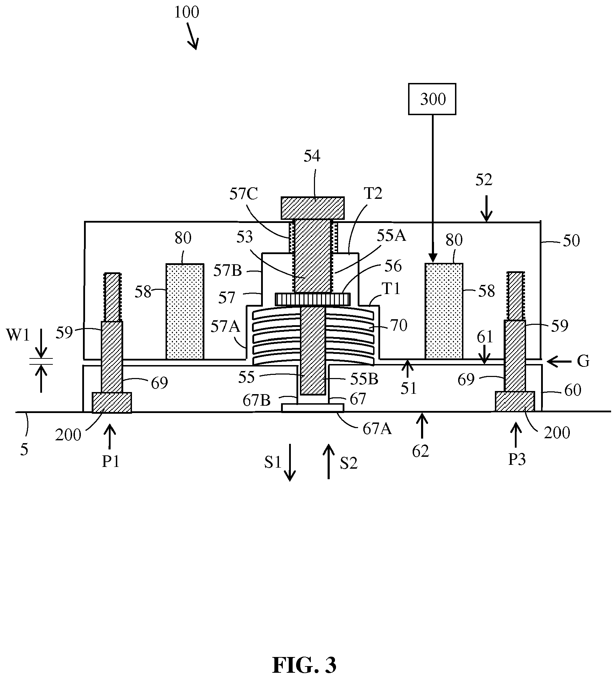

Figure 2 shows an axonometric view and figure 3 shows a cross sectional view of the elevator machinery brake.

The elevator machinery brake 100 may comprise a frame part 50 and an armature part 60.

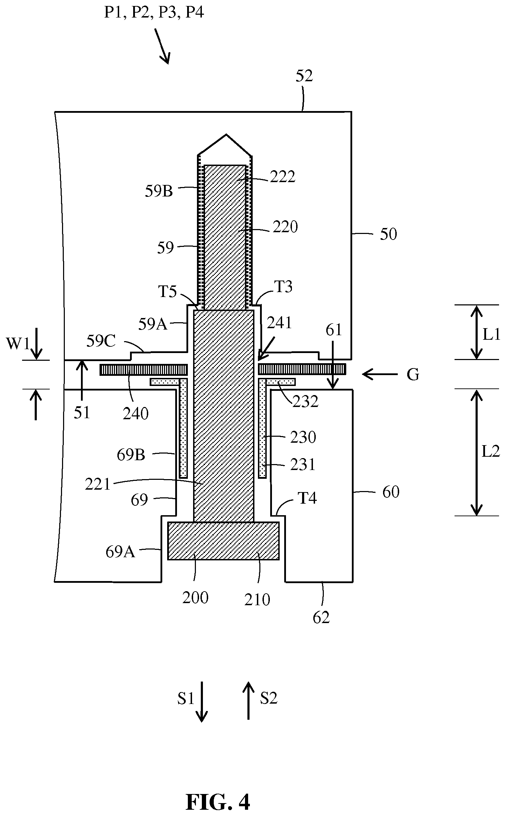

The armature part 60 may be movably supported through four supporting points P1, P2, P3, P4 on the frame part 50. The support arrangement in the supporting points P1, P2, P3, P4 will be described more in detail in connection with figure 4.

The frame part 50 may comprise a first surface 51 and the armature part 60 may comprises a first surface 61. The first surface 51 of the frame part 50 and the first surface 61 of the armature part 60 are facing towards each other. The first surface 51 of the frame part 50 may be substantially planar. The first surface 61 of the armature part 60 may be substantially planar. The armature part 60 is movable in relation to the frame part 50 so that a width W1 of a gap G formed between the first surface 51 of the frame part 50 and the first surface 61 of the armature part 60 may vary. The frame part 50 is stationary. The frame part 50 may be attached to a stationary frame construction of the hoisting machinery 30.

The frame part 50 may further comprise a central bore 57 positioned in a middle portion of the frame part 50. The central bore 57 may extend through the frame part 50 from the first surface 51 to the second surface 52 of the frame part 50. The central bore 57 may be formed of three consecutive bore portions 57A, 57B, 57C. Each of the bore portions 57A, 57B, 57C may have a circular cross-section. The diameter of the central bore 57 may decrease stepwise in the direction from the first surface 51 towards the second surface 52 of the frame part 50.

The first bore portion 57A may extend inwards into the frame part 50 from the first surface 51 of the frame part 50. The third bore portion 57C may extend into the frame part 50 from the second surface 52 of the frame part 50. The second bore portion 57B may extend within the frame part 50 between the first bore portion 57A and the third bore portion 57C. The second surface 52 is opposite to the first surface 51 of the frame part 50.

The diameter of the first bore portion 57A may be greater than the diameter of the second bore portion 57B. A first step T1 may thus be formed in the transition between the first bore portion 57A and the second bore portion 57B. The diameter of the second bore portion 57B may on the other hand be greater than the diameter of the third bore portion 57C. A second step T2 may thus formed in the transition between the second bore portion 57B and the third bore portion 57C.

The armature part 60 may further comprise a central bore 67 positioned in the middle portion of the armature part 60. The central bore 67 extends through the armature part 60 from the first surface 61 to the second surface 62 of the armature part 60. The central bore 67 in the armature part 60 may be concentric with the central bore 57 in the frame part 50. The central bore 67 in the armature part 60 may be formed of two consecutive bore portions 67A, 67B. Each of the bore portions 67A, 67B may have a circular cross-section. The first bore portion 67A may extend from the second surface 62 of the armature part 60 inwards into the armature part 60. The second bore portion 67B may extend from the first surface 61 of the armature part 60 inwards into the armature part 60. The diameter of the first bore portion 67A may be greater compared to the diameter of the second bore portion 67B. A step is thus formed between the two bore portions 67A, 67B.

The elevator machinery brake 100 may further comprise spring means 70 arranged between the frame part 50 and the armature part 60.

The spring means 70 may be fitted at least partly in the frame part 50. The spring means 70 may be supported within the central bore 57 with a guide pin 53 e.g. a pin bolt extending from the second surface 52 of the frame part 50 through the central bore 57 into the spring means 70. The guide pin 53 may comprise a head 54 and a body 55 with a threaded portion 55A and a pin portion 55B. The diameter of the threaded portion 55A of the guide pin 53 may be greater compared to the diameter of the pin portion 55B of the guide pin 53. A support plate 56 e.g. a washer may be provided on the pin portion 55B of the guide pin 53. The hole of the support plate 56 may be smaller than the diameter of the threaded portion 55A of the guide pin 53. The support plate 56 abuts against the step between the pin portion 55B and the threaded portion 55A. A first end of the spring means 70 may be supported on the support plate 56. The spring means 70 may surround the guide pin 53 at least partly. A second opposite end of the spring means 70 may be supported on the first surface 61 of the armature part 60. The compression of the spring means 70 may be regulated by the pin bolt 53. The compression of the spring means 70 is increased when the guide pin 53 is rotated in a clockwise direction i.e. the guide pin 53 moves downwards in the figure and vice a versa.

The central bore 57 in the frame part 50 may receive the guide pin 53, the support plate 56 and the spring means 70. The central bore 67 in the armature part 60 may receive at least an outer end of the pin portion 55B of the guide pin 53. An outer end of the pin portion 55B of the guide pin 53 may thus move in the first direction S1 and in the second direction S2 in the central bore 67 in the armature part 60 when the armature part 60 moves in the first direction S1 and in the second direction S2 in relation to the frame part 50. The guide pin 53 forms thus a guide for the spring means 70 acting between the frame part 50 and the armature part 60.

The first end of the spring means 70 may thus be seated against the first step T1 when the armature part 60 is mounted to the frame part 50. The spring means 70 may be formed of several curved spring plates stacked upon each other. The outer threading 55A of the guide pin 53 mates with an inner treading in the third bore portion 57C in the central bore 57 in the frame part 50. A pre-tensioning of the package of spring plates 70 may be adjusted with the guide pin 53.

The first end of the spring means 70 may be seating against the support plate 56 and the lower end of the spring means 70 may be seating against the first surface 61 of the armature part 60. The force of the spring means 70 is thus directed in a first direction S1 away from the frame part 50. The spring means 70 is thus pushing the armature part 60 in the first direction S1 away from the frame part 50. The spring means 70 will thus activate the machinery brake 100 in a situation in which the armature part 60 is free to move in the first direction S1.

The frame part 50 may further comprise a ring recess 58 receiving electromagnet means 80. The ring recess 58 may have the form of a ring extending from the first surface of the frame part 50 into the frame part 50. The ring recess 58 may accommodate a coil for magnetizing the electromagnet means 80. The electromagnet means 80 may move the armature part 60 in a second direction S2 against the force of the spring means 70 towards the frame part 50. The electromagnet means 80 will thus move the armature part 60 against the force of the spring means 70 in the second direction S2. The machinery brake 100 will be deactivated when the electromagnet means 80 is activated. The second direction S2 is opposite to the first direction S1.

The armature part 60 may be supported on the frame part 50 via four supporting points P1, P2, P3, P4. Each supporting point P1, P2, P3, P4 may comprise a first bore 59 in the frame part 50, a second bore 69 in the armature part 60 and a support pin 200 extending in the first bore 59 and in the second bore 69 between the frame part 50 and the armature part 60. The first bore 59 in the frame part 50 and the second bore 69 in the armature part 60 are concentric. The support pins 200 may extend from the armature part 60 to the frame part 50.

At least a middle portion of the frame part 50 i.e. the portion within the coil may be of a ferromagnetic material e.g. of iron forming a core for the coil. A current flowing in the coil magnetises the core of the frame part 50. Magnetization of the core of the frame part 50 will pull the armature part 60 towards the frame part 50. The core concentrates the magnetic flux produced by the current flowing in the coil.

The armature part 60 may be made of a ferromagnetic material e.g. of iron. The armature part 60 will thus be attracted to the core 50 when a current flows in the coil in the electromagnet means 80 in the frame part 50.

The armature part 60 may be attached to a brake shoe 5. The brake shoe 5 may act on a rotating brake surface provided on a rotating part of the hoisting machinery 30. The brake shoe 5 and the brake surface on the rotating part of the hoisting machinery 30 may be planar of curved.

A controller 300 may control the machinery brake 100 i.e. the electromagnet 80 in the machinery brake 100. The controller 300 may control the current supplied to the coil in the electromagnet 80.

Figure 4 shows a cross sectional view of a fastening arrangement in the elevator machinery brake. The figure shows an enlargement of one supporting point.

The armature part 60 may be movably supported on the frame part 50 through four supporting points P1, P2, P3, P4.

Each of the supporting points P1, P2, P3, P4 may comprise a supporting arrangement 59, 69, 200, 230, 240 for supporting the armature part 60 to the frame part 50. The supporting arrangement 59, 69, 200, 230, 240 may allow movement of the armature part 60 in relation to the frame part 50. The supporting arrangement 59, 69, 200, 230, 240 may further transfer the brake torque from the armature part 60 to the frame part 50. Brake torque occurs when the brake shoe 5 comes into contact with the breaking surface of a rotating part of the hoisting machinery to brake the motion of the hoisting machinery 30. The armature part 60 may thus be kept in a position parallel to the frame part 50 during movement of the armature part 60 in relation to the frame part 50. The armature part 60 may move in the first direction S1 and in the opposite second direction S2 in relation to the frame part 50.

The supporting arrangement 59, 69, 200, 230, 240 in each of the supporting points P1, P2, P3, P4 may comprise a first bore 59 extending from the first surface 51 of the frame part 50 into the frame part 50 to a distance from a second opposite surface 52 of the frame part 50 and a second bore 69 extending through the armature part 60. A longitudinal centre axis of the first bore 59 and a longitudinal centre axis of the second bore 69 coincide when the armature part 60 is supported on the frame part 50.

The first bore 59 may be formed of two consecutive bore portions 59A, 59B. Each of the two bore portions 59A, 59B may have a circular cross-section. The first bore portion 59A may extend inwards from the first surface 51 of the frame part 50. The second bore portion 59B may extend from the inner end of the first portion 59A further inwards into the frame part 50. The diameter of the first bore portion 59A may be greater than the diameter of the second bore portion 59B. A third step T3 may be formed in the transition between the first bore portion 59A and the second bore portion 59B of the first bore 59.

The second bore 69 may be formed of two consecutive bore portions 69A, 69B. Each of the two bore portions 69A, 69B may have a circular cross-section. The first bore portion 69A may extend inwards from a second surface 62 of the armature part 60. The second bore portion 69B may extend inwards from the first surface 61 of the armature part 60. The diameter of the first bore portion 69A may be greater than the diameter of the second bore portion 69B. A fourth step T4 may be formed in the transition between the first bore portion 69A and the second bore portion 69B of the second bore 69.

The support arrangement 59, 69, 200, 230, 240 in each supporting point P1, P2, P3, P4 may further comprise a longitudinal support pin 200, a sliding bearing 230 and a damper plate 240.

Each support pin 200 may be formed of a bolt having a head 210 and a longitudinal body 220. The body 220 may be formed of two consecutive body portions 221, 222. Each of the two body portions 221, 222 may have a circular cross-section. The diameter of the body portions 221, 222 may be different. The first body portion 221 starting from the head 210 may have a greater diameter compared to the second body portion 222 of the support pin 200. A fifth step T5 is thus formed in the transition between the two body portions 221, 222 of the support pin 200.

The support pin 200 may pass from a second surface 62 of the armature part 60 through the second bore 69 in the armature part 60 into the first bore 59 in the frame part 50. The head 210 of the support pin 200 may be positioned in the first bore portion 69A of the second bore 69 in the armature part 60 so that the outer end of the head 210 of the support pin 200 will not in any event protrude from the second surface 62 of the armature part 60. The head 210 of the support pin 200 may seat against the fourth step T4 in the second bore 69 in the armature part 60 and the fifth step T5 of the support pin 200 may seat against the third step T3 in the first bore 59 in the frame part 50 when the support pin 200 is tightened. The width W1 of the gap G between the armature part 60 and the frame part 50 will be limited by the support pin 200 when the support pin 200 is tightened, i.e. the head 210 is seating against the fourth step T4 in the second bore 69 and the fifth step T5 of the bolt 200 is seating against the third step T3 in the first bore 59. The support pin 200 will allow axial movement of the armature part 60 in relation to the frame part 50 while preventing radial movement of the armature part 60 in relation to the frame part 50 caused by the brake torque.

The second bore portion 59B of the first bore 59 in the frame part 50 may be provided with an inner threading receiving an outer threading in the second body portion 222 of the support pin 200.

The sliding bearing 230 may surround the first portion 221 of the body 220 of the support pin 200 in the armature part 60. The sliding bearing 230 may be formed of a cylinder 231 and a flange 232 at an upper end of the cylinder 231. The cylinder 231 may be positioned in the second portion 69B of the second bore 69 in the armature part 60 surrounding the first body portion 221 of the support pin 200. The flange 232 of the sliding bearing 230 may seat against the first surface 61 of the armature part 60 in the gap G between the armature part 60 and the frame part 50.

The damper plate 240 may be positioned on the flange 232 of the sliding bearing 230 in the gap G between the armature part 60 and the frame part 50. The damper plate 240 may be formed of a circular plate having a centre bore 241 adapted to the diameter of the first body portion 221 of the support pin 200. A first surface of the damper plate 240 may face towards the armature part 60 and a second opposite surface of the damper plate 240 may face towards the frame part 50. An inner portion of the first surface of the damper plate 240 is seating against the flange 232 of the sliding bearing 230. An outer portion of the first surface of the damper plate 240 is at a distance from the first surface 61 of the armature part 60, whereby said distance is determined by the thickness of the flange 232 of the sliding bearing 230.

The armature part 60 may move in the axial direction with the sliding bearing 230 on the first body portion 221 of the support pin 200 and thereby in relation to the frame part 50.

The flange 232 in the sliding bearing 230 and the damper plate 240 act as damping elements when the electromagnet means 80 pulls the armature part 60 towards the frame part 50.

The frame part 50 may further comprise a recess 59C formed at the outer end of the first bore portion 59A of the first bore 59 in the frame part 50. The recess 59C may be circular. The diameter of the recess 59C is greater than the diameter of the first bore portion 59A of the first bore 59 in the frame part 50. The diameter of the recess 59C may further be greater than the diameter of the flange 232 of the sliding bearing 230 but smaller than the diameter of the damper plate 240. The third recess 59C forms thus a cavity into which an inner portion of the damper plate 240 can bend when the electromagnet means 80 pulls the armature part 60 against the frame part 50. The damper plate 240 may be made of spring steel. The flange 232 of the gliding bearing 230 will press the inner portion of the damper plate 240 into the cavity 59A when the armature part 60 strikes against the frame part 50.

The length of the first body portion 221 of the support pin 200 may be determined by the sum of the length L1 from the third step T3 to the first surface 51 of the frame part 50, the length L2 from the fourth step T4 to the first surface 61 of the armature part 60 and the maximum width W1 of the gap G. The length of the first body portion 221 of the support pin 200 will define the maximum stroke of the spring means 70. The maximum width W1 of the gap G should be dimensioned so that the brake shoe 5 may in all circumstances be able to press with a sufficient force against the brake surface in order to stop the car 10.

The first body portion 221 of the support pin 200 form the gliding surface along which the sliding bearing 230 may glide in the first direction S1 and in the second direction S2 when the armature part 60 moves in relation to the frame part 50. The four support pins 200 are parallel, whereby the first surface 61 of the armature part 60 will remain parallel to the first surface 51 of the frame part 50 during the movement of the armature part 60.

The machinery brake operates in the following way:
The controller 300 keeps the electromagnet means 80 in an activated state i.e. keeps the current supply to the electromagnet means 80 switched on when the elevator is operated in a normal state. The armature part 60 is thus pulled towards the frame part 50, whereby the brake shoe 5 is at a distance from the brake surface. The hoisting machinery 30 may thus operate normally.

The controller 300 disconnects the current supply to the electromagnet means 80 i.e. deactivates the electromagnet means 80, when the elevator car 10 is to be stopped. Deactivation of the electromagnet means 80 is realized by disconnecting the current flowing through the coil in the electromagnet means 80 so that the magnetic field keeping the armature part 60 pulled towards the frame part 50 is disconnected. The spring means 70 will thus push the armature part 60 away from the frame part 50, whereby the brake shoe 5 will be pushed against the brake surface. The rotation of the traction sheave 33 will thus be stopped, whereby also the car 10 is stopped.

When the machinery brake 100 starts to open and when the armature part 60 starts to move towards the frame part 50, the force attraction exerted on the armature part 60 by the electromagnet means 80 starts to increase. This is due to the fact that the width W1 of the gap G between the first surface 51 of the frame part 50 and the first surface 61 of the armature part 60 starts simultaneously to decrease. The increasing force of attraction leads to an increase in the kinetic energy of the armature part 60, which may cause the armature part 60 to noisily strike against the frame part 50.

This problem is eliminated with the damper plate 240, the recess 59C and the bushing 230 used in the invention.

The embodiment shown in the figures shows four supporting points P1, P2, P3, P4 between the frame part 50 and the armature part 60. This may be an advantageous embodiment, but the invention is not limited to any specific number of supporting points P1, P2, P3, P4. The number of supporting points P1, P2, P3, P4 may be chosen freely according to the needs in each application. The size of the machinery brake may e.g. influence the required number of supporting points P1, P2, P3, P4.

The supporting points P1, P2, P3, P4 are in the embodiment shown in the figures positioned in the corners of a rectangle radially outside the outer perimeter of the electromagnet means 80. This may be an advantageous embodiment, but supporting points P1, P2, P3, P4 could in addition and/or instead be positioned in a different pattern and/or in different positions on the armature part 60.

The figures show an embodiment in which the frame part 50 and the armature part 60 have a generally rectangular form. This may be an advantageous embodiment, but the invention is not limited to any specific form of the frame part 50 and/or the armature part 60. The frame part 50 and/or the armature part 60 could e.g. have a circular form or an elliptic form or a polygonal form.

The figures show an embodiment in which one spring means 70 is positioned in the middle of the frame part 50. This may be an advantageous embodiment, but the spring means 70 could be formed of several springs distributed in any pattern on the frame part 50.

The figures show a spring means 70 formed of several spring plates placed in a stack. This may be an advantageous embodiment, but any type and any number of spring means 70 may be used in the invention. The spring means 70 could e.g. be formed of one or more spring plates or of one or more coil springs. The spring plates may have a circular form. The spring plates may be curved. The spring plates may be made of spring steel.

The figures show an embodiment in which the electromagnet means 80 is formed of one electromagnet surrounding the spring means 70. This is an advantageous embodiment, but the electromagnet means 80 could be formed of several electromagnets distributed in any pattern within the frame part 50.

The machinery brake 100 may be used in connection with any kind of brake. The brake surface on which the brake shoe is acting could be curved or planar. The brake could be e.g. a drum brake or a disc brake.

The support pins 200 may be formed of bolts. The bolts may have a head 210 and a body 220 extending outwards from the head 210. The body 220 of the bolt 200 may be formed of a first body portion 221 extending outwards from the head 210 and a second body portion 222 having a smaller diameter. At least the second body portion 222 of the bolt 200 may be provided with an outer threading.

The use of the invention is not limited to the elevator disclosed in the figures. The invention can be used in any type of elevator e.g. an elevator comprising a machine room or lacking a machine room, an elevator comprising a counterweight or lacking a counterweight. The counterweight could be positioned on either side wall or on both side walls or on the back wall of the elevator shaft. The drive, the motor, the traction sheave, and the machine brake could be positioned in a machine room or somewhere in the elevator shaft. The car guide rails could be positioned on opposite side walls of the shaft or on a back wall of the shaft in a so called ruck-sack elevator.

It will be obvious to a person skilled in the art that, as the technology advances, the inventive concept can be implemented in various ways. The invention and its embodiments are not limited to the examples described above but may vary within the scope of the claims.

## Claims

1. An elevator machinery brake comprising
a frame part (50) having a first surface (51),
an armature part (60) having a first surface (61) facing towards the first surface (51) of the frame part (50), the armature part (60) being movably supported through at least two supporting points (P1, P2, P3, P4) on the frame part (50), the at least two supporting points (P1, P2, P3, P4) limiting a width (W1) of a gap (G) between the first surface (51) of the frame part (50) and the first surface (61) of the armature part (60),
spring means (70) fitted at least partly into the frame part (50) and acting between the frame part (50) and the armature part (60) for pushing the armature part (60) in a first direction (S1) away from the frame part (50) in order to activate the machinery brake,
electromagnet means (80) fitted into the frame part (50) for pulling the armature part (60) in a second direction (S2) opposite to the first direction (S1) against the force of the spring means (70) towards the frame part (50) in order to deactivate the machinery brake, whereby each of the supporting points (P1, P2, P3, P4) comprises
a longitudinal support pin (200) extending between the armature part (60) and the frame part (50) for supporting the armature part (60) movably on the frame part (50) and for limiting the width (W1) of the gap (G),
**characterized in that** each of the supporting points (P1, P2, P3, P4) further comprises
a sliding bearing (230) surrounding the support pin (200) in the armature part (60), a flange (232) of the sliding bearing (230) seating against the first surface (61) of the armature part (60),
a damper plate (240) surrounding the support pin (200) in the gap (G) and seating against the flange (232) of the sliding bearing (230),
a recess (59C) surrounding the support pin (200) in the frame part (50), said recess (59C) extending from the first surface (51) of the frame part (50) inwards into the frame part (50), whereby
the armature part (60) is movable in the first and in the second direction (S1, S2) via the sliding bearing (230) on the support pins (200),
the flange (232) of the sliding bearing (230) and the damper plate (240) act as damping elements when the electromagnet means (80) pulls the armature part (60) towards the frame part (50),
the damper plate (240) is bendable into the recess (59C) when the electromagnet means (80) pulls the armature part (60) towards the frame part (50).

2. The elevator machinery brake according to claim 1, wherein a middle portion of the frame part (50) comprises a central bore (57) formed of consecutive bore portions (57A, 57B, 57C), the diameter of the central bore (57) decreasing stepwise in the direction from the first surface (51) towards a second opposite surface (52) of the frame part (50), the first bore portion (57A) at the first surface (51) of the frame part (50) receiving the spring means (70) so that a first end of the spring means (70) is supported in the frame part (50) and a second opposite end of the spring means (70) is supported on the first surface (61) of the armature part (60).

3. The elevator machinery brake according to claim 2, wherein a guide pin (53) extends from the second surface (52) of the frame part (50) through the central bore (57) into the spring means (70), the guide pin (53) being attached to the frame part (50) and provided with a support plate (56) supporting the first end of the spring means (70) so that the spring means (70) becomes pressed between the support plate (56) and the armature part (60).

4. The elevator machinery brake according to any one of claims 1 to 3, wherein the frame part (50) comprises a ring recess (58) surrounding the central bore (57) and extending inwards from the first surface (51) of the frame part (50), the ring recess (58) receiving a coil of the electromagnet means (80).

5. The elevator machinery brake according to any one of claims 1 to 4, wherein each supporting point (P1, P2, P3, P4) comprises a first bore (59) in the frame part (50) having two consecutive bore portions (59A, 59B) with a different diameter, a third step (T3) being formed in the transition between the two bore portions (59A, 59B).

6. The elevator machinery brake according to claim 5, wherein each supporting point (P1, P2, P3, P4) comprises a second bore (69) in the armature part (60) having two consecutive bore portions (69A, 69B) with a different diameter, a fourth step (T4) being formed in the transition between the two bore portions (69A, 69B).

7. The elevator machinery brake according to claim 5 and 6, wherein the support pin (200) comprises a head (210) and a longitudinal body (220), the body (220) comprising two consecutive body portions (221, 222), a diameter of a first body portion (221) starting from the head (210) being greater than a diameter of a second body portion (222), whereby a fifth step (T5) is formed in the transition between the first body portion (221) and the second body portion (222) of the support pin (200).

8. The elevator machinery brake according to claim 7, wherein the head (210) of the support pin (200) seats against the fourth step (T4) in a second bore (69) and the fifth step (T5) of the support pin (200) seats against the third step (T3) in a first bore (59) when the armature part (60) is supported on the frame part (50) with the support pins (200).

9. The elevator machinery brake according to any one of claims 5 to 8, wherein the recess (59C) is formed around the first bore (59) in the frame part (50).

10. The elevator machinery brake according to claim 9, wherein a diameter of the recess (59C) is smaller than a diameter of the damper plate (240) but greater than a diameter of the flange (232) of the sliding bearing (230).

11. The elevator machinery brake according to any one of claims 1 to 10, wherein the support pins (200) are positioned radially outside the ring recess (58).

12. The elevator machinery brake according to any one of claims 1 to 11, wherein the armature part (60) is supported on the frame part (50) through four supporting points (P1, P2, P3, P4).

13. The elevator machinery brake according to claim 12, wherein the support pins (200) are positioned in the corners of a rectangle.

14. An elevator comprising a car (10) movable upwards and downwards in a shaft (20) by a hoisting machinery (30) comprising a motor (32), a traction sheave (33) and a machinery brake (100) according to any one of claims 1 to 13.

## Patentansprüche

1. Aufzugsmaschinenbremse, die Folgendes umfasst
ein Rahmenteil (50) mit einer ersten Fläche (51),
ein Ankerteil (60) mit einer ersten Fläche (61), die der ersten Fläche (51) des Rahmenteils (50) zugewandt ist, wobei das Ankerteil (60) von mindestens zwei Stützpunkten (P1, P2, P3, P4) am Rahmenteil (50) bewegbar gestützt wird, wobei die mindestens zwei Stützpunkte (P1, P2, P3, P4) eine Breite (W1) eines Spalts (G) zwischen der ersten Fläche (51) des Rahmenteils (50) und der ersten Fläche (61) des Ankerteils (60) begrenzen,
ein Federmittel (70), das mindestens teilweise in das Rahmenteil (50) eingesetzt ist und zwischen dem Rahmenteil (50) und dem Ankerteil (60) wirkt, um das Ankerteil (60) in eine erste Richtung (S1) vom Rahmenteil (50) weg zu drücken, um die Maschinenbremse zu aktivieren,
ein Elektromagnetmittel (80) das in das Rahmenteil (50) eingesetzt ist, um das Ankerteil (60) in eine zweite Richtung (S2), die der ersten Richtung (S1) entgegengesetzt ist, gegen die Kraft des Federmittels (70) zum Rahmenteil (50) zu ziehen, um die Maschinenbremse zu deaktivieren, wodurch jeder der Stützpunkte (P1, P2, P3, P4) Folgendes umfasst
einen länglichen Stützstift (200), der sich zwischen dem Ankerteil (60) und dem Rahmenteil (50) erstreckt, um das Ankerteil (60) bewegbar auf dem Rahmenteil (50) zu stützen und um die Breite (W1) des Spalts (G) zu begrenzen,
**dadurch gekennzeichnet, dass** jeder der Stützpunkte (P1, P2, P3, P4) ferner Folgendes umfasst
ein Gleitlager (230), das den Stützstift (200) im Ankerteil (60) umgibt, wobei ein Flansch (232) des Gleitlagers (230) an der ersten Fläche (61) des Ankerteils (60) anliegt,
eine Dämpferplatte (240), die den Stützstift (200) im Spalt (G) umgibt und am Flansch (232) des Gleitlagers (230) anliegt,
eine Ausnehmung (59C), die den Stützstift (200) im Rahmenteil (50) umgibt, wobei sich die Ausnehmung (59C) von der ersten Fläche (51) des Rahmenteils (50) nach innen in das Rahmenteil (50) erstreckt, wodurch
das Ankerteil (60) via das Gleitlager (230) auf den Stützstiften (200) in die erste und die zweite Richtung (S1, S2) bewegbar ist,
der Flansch (232) des Gleitlagers (230) und die Dämpferplatte (240) als Dämpfungselemente fungieren, wenn das Elektromagnetmittel (80) das Ankerteil (60) zum Rahmenteil (50) zieht,
die Dämpferplatte (240) in die Ausnehmung (59C) biegbar ist, wenn das Elektromagnetmittel (80) das Ankerteil (60) zum Rahmenteil (50) zieht.

2. Aufzugsmaschinenbremse nach Anspruch 1, wobei ein mittlerer Abschnitt des Rahmenteils (50) eine zentrale Bohrung (57) umfasst, die aus aufeinanderfolgenden Bohrungsabschnitten (57A, 57B, 57C) gebildet ist, wobei der Durchmesser der zentralen Bohrung (57) in die Richtung von der ersten Fläche (51) zu einer zweiten gegenüberliegenden Fläche (52) des Rahmenteils (50) schrittweise abnimmt, wobei der erste Bohrungsabschnitt (57A) an der ersten Fläche (51) des Rahmenteils (50) das Federmittel (70) aufnimmt, derart, dass ein erstes Ende des Federmittels (70) im Rahmenteil (50) gestützt wird und ein zweites gegenüberliegendes Ende des Federmittels (70) auf der ersten Fläche (61) des Ankerteils (60) gestützt wird.

3. Aufzugsmaschinenbremse nach Anspruch 2, wobei sich ein Führungsstift (53) von der zweiten Fläche (52) des Rahmenteils (50) durch die zentrale Bohrung (57) in das Federmittel (70) erstreckt, wobei der Führungsstift (53) am Rahmenteil (50) befestigt und mit einer Stützplatte (56) versehen ist, die das erste Ende des Federmittels (70) stützt, derart, dass das Federmittel (70) zwischen der Stützplatte (56) und dem Ankerteil (60) gedrückt wird.

4. Aufzugsmaschinenbremse nach einem der Ansprüche 1 bis 3, wobei das Rahmenteil (50) eine Ringausnehmung (58) umfasst, die die zentrale Bohrung (57) umgibt und sich von der ersten Fläche (51) des Rahmenteils (50) nach innen erstreckt, wobei die Ringausnehmung (58) eine Spule des Elektromagnetmittels (80) aufnimmt.

5. Aufzugsmaschinenbremse nach einem der Ansprüche 1 bis 4, wobei jeder Stützpunkt (P1, P2, P3, P4) eine erste Bohrung (59) im Rahmenteil (50) mit zwei aufeinanderfolgenden Bohrungsabschnitten (59A, 59B) mit einem unterschiedlichen Durchmesser umfasst, wobei im Übergang zwischen den zwei Bohrungsabschnitten (59A, 59B) eine dritte Stufe (T3) gebildet ist.

6. Aufzugsmaschinenbremse nach Anspruch 5, wobei jeder Stützpunkt (P1, P2, P3, P4) eine zweite Bohrung (69) im Ankerteil (60) mit zwei aufeinanderfolgenden Bohrungsabschnitten (69A, 69B) mit einem unterschiedlichen Durchmesser umfasst, wobei im Übergang zwischen den zwei Bohrungsabschnitten (69A, 69B) eine vierte Stufe (T4) gebildet ist.

7. Aufzugsmaschinenbremse nach Anspruch 5 und 6, wobei der Stützstift (200) einen Kopf (210) und einen länglichen Körper (220) umfasst, wobei der Körper (220) zwei aufeinanderfolgende Körperabschnitte (221, 222) umfasst, wobei ein Durchmesser eines ersten Körperabschnitts (221), beginnend beim Kopf (210), größer ist als ein Durchmesser eines zweiten Körperabschnitts (222), wodurch im Übergang zwischen dem ersten Körperabschnitt (221) und dem zweiten Körperabschnitt (222) des Stützstifts (200) eine fünfte Stufe (T5) gebildet ist.

8. Aufzugsmaschinenbremse nach Anspruch 7, wobei der Kopf (210) des Stützstifts (200) an der vierten Stufe (T4) in einer zweiten Bohrung (69) anliegt und die fünfte Stufe (T5) des Stützstifts (200) an der dritten Stufe (T3) in einer ersten Bohrung (59) anliegt, wenn das Ankerteil (60) mit den Stützstiften (200) auf dem Rahmenteil (50) gestützt wird.

9. Aufzugsmaschinenbremse nach einem der Ansprüche 5 bis 8, wobei die Ausnehmung (59C) um die erste Bohrung (59) im Rahmenteil (50) gebildet ist.

10. Aufzugsmaschinenbremse nach Anspruch 9, wobei ein Durchmesser der Ausnehmung (59C) kleiner ist als ein Durchmesser der Dämpferplatte (240), aber größer als ein Durchmesser des Flansches (232) des Gleitlagers (230).

11. Aufzugsmaschinenbremse nach einem der Ansprüche 1 bis 10, wobei die Stützstifte (200) radial außerhalb der Ringausnehmung (58) positioniert sind.

12. Aufzugsmaschinenbremse nach einem der Ansprüche 1 bis 11, wobei das Ankerteil (60) über vier Stützpunkte (P1, P2, P3, P4) auf dem Rahmenteil (50) gestützt wird.

13. Aufzugsmaschinenbremse nach Anspruch 12, wobei die Stützstifte (200) in den Ecken eines Rechtecks positioniert sind.

14. Aufzug, der eine Kabine (10) umfasst, die mittels einer Hebemaschine (30), die einen Motor (32), eine Treibscheibe (33) und eine Maschinenbremse (100) nach einem der Ansprüche 1 bis 13 umfasst, in einem Schacht (20) nach oben und unten bewegbar ist.

## Revendications

1. Frein de machinerie d'ascenseur comprenant :
une partie de bâti (50) ayant une première surface (51),
une partie d'armature (60) ayant une première surface (61) orientée vers la première surface (51) de la partie de bâti (50), la partie d'armature (60) étant supportée de manière mobile par le biais d'au moins deux points de support (P1, P2, P3, P4) sur la partie de bâti (50), les au moins deux points de support (P1, P2, P3, P4) limitant une largeur (W1) d'un espace (G) entre la première surface (51) de la partie de bâti (50) et la première surface (61) de la partie d'armature (60),
un moyen de ressort (70) monté au moins partiellement dans la partie de bâti (50) et agissant entre la partie de bâti (50) et la partie d'armature (60) pour pousser la partie d'armature (60) dans une première direction (S1) à l'opposé de la partie de bâti (50) afin d'activer le frein de machinerie,
un moyen d'électroaimant (80) monté dans la partie de bâti (50) pour tirer la partie d'armature (60) dans une seconde direction (S2) opposée à la première direction (S1) contre la force du moyen de ressort (70) vers la partie de bâti (50) afin de désactiver le frein de machinerie, moyennant quoi chacun des points de support (P1, P2, P3, P4) comprend :
une broche de support longitudinale (200) s'étendant entre la partie d'armature (60) et la partie de bâti (50) pour support la partie d'armature (60) de manière mobile sur la partie de bâti (50) et pour limiter la largeur (W1) de l'espace (G),
**caractérisé en ce que** chacun des points de support (P1, P2, P3, P4) comprend en outre :
un palier coulissant (230) entourant la broche de support (200) dans la partie d'armature (60), une bride (232) du palier coulissant (230) installée contre la première surface (61) de la partie d'armature (60),
une plaque d'amortisseur (240) entourant la broche de support (200) dans l'espace (G) et installée contre la bride (232) du palier coulissant (230),
un évidement (59C) entourant la broche de support (200) dans la partie de bâti (50), ledit évidement (59C) s'étendant à partir de la première surface (51) de la partie de bâti (50) vers l'intérieur dans la partie de bâti (50), moyennant quoi :
la partie d'armature (60) est mobile dans la première et dans la seconde direction (S1, S2) via le palier coulissant (230) sur les broches de support (200),
la bride (232) du palier coulissant (230) et la plaque d'amortisseur (240) servent d'éléments d'amortissement lorsque le moyen d'électroaimant (80) tire la partie d'armature (60) vers la partie de bâti (50),
la plaque d'amortisseur (240) peut se plier dans l'évidement (59C) lorsque le moyen d'électroaimant (80) tire la partie d'armature (60) vers la partie de bâti (50).

2. Frein de machinerie d'ascenseur selon la revendication 1, dans lequel une partie centrale de la partie de bâti (50) comprend un alésage central (57) formé avec des parties d'alésages consécutives (57A, 57B, 57C), le diamètre de l'alésage central (57) diminuant par palier dans la direction allant de la première surface (51) vers une seconde surface (52) opposée de la partie de bâti (50), la première partie d'alésage (57A) au niveau de la première surface (51) de la partie de bâti (50) recevant le moyen de ressort (70) de sorte qu'une première extrémité du moyen de ressort (70) est supportée dans la partie de bâti (50) et une seconde extrémité opposée du moyen de ressort (70) est supportée sur la première surface (61) de la partie d'armature (60).

3. Frein de machinerie d'ascenseur selon la revendication 2, dans lequel une broche de guidage (53) s'étend à partir de la seconde surface (52) de la partie de bâti (50) à travers l'alésage central (57) dans le moyen de ressort (70), la broche de guidage (53) étant fixée sur la partie de bâti (50) et prévue avec une plaque de support (56) supportant la première extrémité du moyen de ressort (70) de sorte que le moyen de ressort (70) est comprimé entre la plaque de support (56) et la partie d'armature (60).

4. Frein de machinerie d'ascenseur selon l'une quelconque des revendications 1 à 3, dans lequel la partie de bâti (50) comprend un évidement annulaire (58) entourant l'alésage central (57) et s'étendant vers l'intérieur à partir de la première surface (51) de la partie de bâti (50), l'évidement annulaire (58) recevant une bobine du moyen d'électroaimant (80).

5. Frein de machinerie d'ascenseur selon l'une quelconque des revendications 1 à 4, dans lequel chaque point de support (P1, P2, P3, P4) comprend un premier alésage (59) dans la partie de bâti (50) ayant deux parties d'alésage (59A, 59B) consécutives avec un diamètre différent, un troisième gradin (T3) étant formé dans la transition entre les deux parties d'alésage (59A, 59B).

6. Frein de machinerie d'ascenseur selon la revendication 5, dans lequel chaque point de support (P1, P2, P3, P4) comprend un second alésage (69) dans la partie d'armature (60) ayant deux parties d'alésage (69A, 69B) consécutives avec un diamètre différent, un quatrième gradin (T4) étant formé dans la transition entre les deux parties d'alésage (69A, 69B).

7. Frein de machinerie d'ascenseur selon les revendications 5 et 6, dans lequel la broche de support (200) comprend une tête (210) et un corps longitudinal (220), le corps (220) comprenant deux parties de corps (221, 222) consécutives, un diamètre d'une première partie de corps (221) commençant à partir de la tête (210) étant supérieur à un diamètre d'une seconde partie de corps (222), moyennant quoi un cinquième gradin (T5) est formé dans la transition entre la première partie de corps (221) et la seconde partie de corps (222) de la broche de support (200).

8. Frein de machinerie d'ascenseur selon la revendication 7, dans lequel la tête (210) de la broche de support (200) est installée contre le quatrième gradin (T4) dans un second alésage (69) et le cinquième gradin (T5) de la broche de support (200) est installé contre le troisième gradin (T3) dans un premier alésage (59) lorsque la partie d'armature (60) est supportée sur la partie de bâti (50) avec les broches de support (200).

9. Frein de machinerie d'ascenseur selon l'une quelconque des revendications 5 à 8, dans lequel l'évidement (59C) est formé autour du premier alésage (59) dans la partie de bâti (50) .

10. Frein de machinerie d'ascenseur selon la revendication 9, dans lequel un diamètre de l'évidement (59C) est inférieur à un diamètre de la plaque d'amortisseur (240) mais supérieur à un diamètre de la bride (232) du palier coulissant (230).

11. Frein de machinerie d'ascenseur selon l'une quelconque des revendications 1 à 10, dans lequel les broches de support (200) sont positionnées radialement à l'extérieur de l'évidement annulaire (58).

12. Frein de machinerie d'ascenseur selon l'une quelconque des revendications 1 à 11, dans lequel la partie d'armature (60) est supportée sur la partie de bâti (50) par le biais de quatre points de support (P1, P2, P3, P4).

13. Frein de machinerie d'ascenseur selon la revendication 12, dans lequel les broches de support (200) sont positionnées dans les coins d'un rectangle.

14. Ascenseur comprenant une cabine (10) mobile vers le haut et vers le bas dans une gaine (20) par une machinerie de levage (30) comprenant un moteur (32), une poulie de traction (33) et un frein de machinerie (100) selon l'une quelconque des revendications 1 à 13.
